# EUROPEAN PATENT SPECIFICATION

(11) **EP 1 343 271 B1**
(45) Date of publication and mention of the grant of the patent: **10.08.2005**
(21) Application number: 02005250.2
(22) Date of filing: 08.03.2002
(51) Int. Cl.: H04L 12/24, H04L 29/06

(54) **Method and apparatus for providing configuration data**
Verfahren und Vorrichtung für die Bereitstellung von Konfigurationsdaten
Procédé et dispositif pour fournir des données de configuration

(43) Date of publication of application: 10.09.2003
(73) Proprietor: Sun Microsystems, Inc., Santa Clara, California 95054 (US)
(72) Inventor: Barfurth, Joerg U., 21723 Hollern-Twielenfleth (DE); Heilig, Joerg, 20097 Hamburg (DE)
(74) Representative: HOFFMANN - EITLE

(56) References cited:
- EP-A- 0 592 079
- EP-A- 0 918 411
- EP-A- 1 085 694
- US-A- 6 105 063
- US-B1- 6 243 747

## Description

### Field of the invention

The present invention relates to a method and a configuration server for providing configuration data values in a client /server data processing environment.

### Background of the invention

Users access services via a communication network, for example the telephone network or the Internet, using different kinds of client devices to communicate. Typical devices are personal computers (PC), workstations, personal digital assistants (PDA), mobile phones and the like. These client devices may communicate via the communication network with a server providing access to said services which are understood to comprise pieces of software, content, or functionality made available via the communication network. In order to provide the services to different users using different client devices such that the individual user may use any service on a variety of client devices in an individualized manner, for example by setting up his own working environment, it is required to make use of configuration data stored in a hierarchical system and/or data structure. The configuration data relate to the user, for example his person, his location, his preferred language etc., to the services which the user wishes to access and to the client devices which the user may use. For example, a user may want to use his mobile phone to read electronic mail and uses his mobile phone to communicate with the server providing access to an e-mail service. A configuration server may be employed to provide configuration data to clients, said configuration data comprising a plurality of configuration items.

Typically, configuration data are stored in a database according to a given data schema defining a data tree. Both the server and the client are aware of the data structure of the configuration data, although the client may be aware of only a subset of the configuration data known to the server or vice versa. Adding further data requires a modification of the data schema by introducing additional levels into the data tree. Although mainly performed at the server device, modifications of this kind often require adapting also the client and/or the services.

US 6 243 747 B1 discloses a method and apparatus for defining and enforcing policies for configuration management in communications networks. Here, the parameters that govern the operational characteristics of a network device including the use of templates for generating configuration records of network devices for selected model type are monitored. Further, templates are used to screen a model in order to retrieve attribute values for parameters and create a configuration record. The configuration records may be stored in the configuration manager or other storage device and/or transferred to the pre-existing model database.

### Summary of the Invention

It is therefore desirable to provide a method and a configuration server for providing configuration data in a client/server data processing environment which allow a greater degree of flexibility regarding the configuration data without requiring a modification of the data scheme.

The problem underlying the invention is solved according to a method for providing configuration data with the features of independent claim 1, as well as according to a configuration server with the features of claim 13. Further, the problem underlying the invention is solved by a configuration data storage unit with the features of independent claim 21.

According to an embodiment of the invention, there is provided a method for providing configuration data at a configuration server in a client/server data processing environment comprising the operations: receiving from a client a request to provide values for configuration items of said configuration data; determining for each of said requested configuration items the respective one of one or more dimensions to which the configuration items of said configuration data have been assigned such that a configuration item is assigned to exactly one of said dimensions; determining values for each of said configuration items by applying rules associated with said dimensions; and transmitting the values to said client.

According to another embodiment of the invention, there is provided a configuration server comprising a receiving unit suitable for receiving from said client at least one parameter or a request to provide values for one or more configuration items of said configuration data; a retrieving unit suitable for retrieving values for the requested configuration items of said configuration data; and a transmitting unit suitable for transmitting to said client the values retrieved by said retrieving unit; wherein each of said configuration items of said configuration data is assigned to only one of one or more dimensions some of which are related to a parameter or a combination of parameters and for each of which at least one rule is defined to be applied by the configuration server for determining a value for a configuration item of said dimension; and wherein said retrieving unit comprises a first determining unit for determining the dimension to which a requested configuration item is assigned and a second determining unit for determining a value for said configuration item in accordance with said at least one rule.

According to an embodiment of the invention, the configuration items are assigned to sets of configuration items, the assignment being such that a single configuration item is assigned to exactly one set of configuration items. In other words, no two sets of configuration items have a configuration item in common. However, all configuration items of a set of configuration items vary with the same parameter or combination of parameters. A set of configuration items may comprise one or more configuration items and is named "dimension" herein.

Further, according to an embodiment of the invention, values for the configuration items are obtained taking into consideration a parameter or a combination of parameters. For this purpose, rules are defined for each dimension, which rules refer to a parameter or a combination of parameters of the respective dimension.

Thereby, a greater degree of flexibility is achieved with respect to the providing of configuration data as both aspects of the embodiment of the invention, i.e. the taking into consideration of parameters and the assigning of configuration items to dimensions for which rules are defined referring to said parameters, allow to introduce new configuration data or new dependencies among the configuration data without amending the configuration data structure. Basically, the flexibility is achieved because the assignment of configuration items to dimensions is configurable as well as the relation of dimensions/rules and parameters. The dependency is encapsulated in the assignment of configuration items to dimensions and the rules which are associated with the dimensions and related to the parameters. The assignment of the configuration items, the rules of the dimensions and their relation to parameters as well the parameters may be changed without the need to change the configuration data structure.

### Brief description of the drawings

- Fig. 1: shows a block diagram illustrating a client/server data environment including a configuration server according to an embodiment of the invention; and
- Fig. 2: shows a diagram illustrating operations executed in accordance with a method which is an embodiment of the invention.

### Detailed description of the preferred embodiments

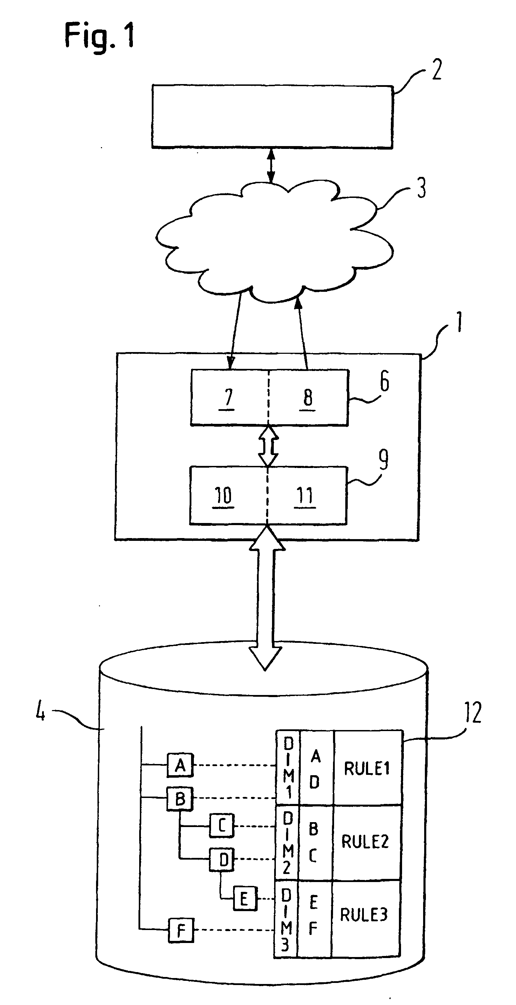

In the following an embodiment of the invention will be described with respect to Fig. 1 which shows a block diagram illustrating a client / server environment in which the method and apparatus according to the present invention may be implemented.

Fig. 1 shows a client / server environment comprising a configuration server 1 and a client 2 communicating with the configuration server 1 via a communication network 3, for example the Internet. The configuration server 1 has access to configuration data, for example stored in a storage unit 4. The configuration data comprise one or more configuration items A, B, C, D, E and F for which values may be retrieved by the configuration server 1. Whenever the client 2 requests the configuration server 1 to provide values for one or more configuration items of said configuration data, the configuration server 1 accesses the configuration data stored in said storage unit 4, retrieves values for the requested configuration items and transmits the retrieved values for the requested configuration items to the client 2 via the communication network 3.

Accordingly, the configuration server 1 may comprise a communication unit 6 for communicating with said client 2 via the communication network 3. The communication unit 6 may be understood to comprise a receiving unit 7 for receiving information, for example the above mentioned request, from said client 2 and a transmitting unit 8 for transmitting information, for example the above mentioned values for the requested configuration items, to said client 2 via the communication network 3, respectively. The communication unit 6 may be adapted to allow simultaneous communication between the configuration server 1 and more than one client.

It should be noted that in the description of embodiments of the invention, the term 'client' is understood to include also a server acting as a client when seen from the configuration server. In other words, any device sending a request to the configuration server 1 to provide configuration data is understood to be a client according to the invention.

Further, the configuration server 1 may comprise a retrieving unit 9 for retrieving values for the configuration items from said storage unit 4. The access may be accomplished by providing said storage unit 4 as an integral part of said configuration server 1. However, the storage unit 4 may also be provided external to the configuration server 1 but in communication with the configuration server 1 such that data stored in the storage unit 4 can be retrieved by the configuration server 1. The retrieving unit 9 may comprise a first determining unit 10 for determining a dimension to which a configuration item is assigned and a second determining unit 11 for determining a value for a configuration item by applying a rule associated with the dimension of the respective configuration item. The first and the second determining units 10 and 11 may be combined into a single determining unit 10/11 suitable to perform the tasks of determining dimensions and of determining values for configuration items.

Generally, according to an embodiment, each configuration item of the configuration data is assigned to one of one or more dimensions such that each dimension comprises only configuration items which vary with the same parameter or the same combination of parameters or which are independent of parameters. In other words, if a dimension relates to parameters, said dimension is related to one parameter or one combination of parameters in that all configuration items of a dimension are dependent from said one parameter or said one combination of parameters.

In the embodiment of the invention described in the following by means of example, the configuration server 1 is adapted to provide values for configuration items A, B, C, D, E and F, as indicated in Fig. 1. These values are stored in a configuration values storage unit 12 in the storage unit 4. In order to be retrieved by the configuration server 1, each of the configuration items A, B, C, D, E and F is assigned to one of three dimensions which are sets of one or more configuration items having no configuration item in common. In the described embodiment, configuration items A and D have been assigned to dimension DIM1, configuration items B and C have been assigned to dimension DIM2, and configuration items E and F have been assigned to dimension DIM3. The assignment described above is also expressed in the following Table 1.

**Table 1**

| **Item** | **Dimension** | **Rule** |
|---|---|---|
| A | DIM1 | RULE1 |
| B | DIM2 | RULE2 |
| C | DIM2 | RULE2 |
| D | DIM1 | RULE1 |
| E | DIM3 | RULE3 |
| F | DIM3 | RULE3 |

Generally, according to an embodiment of the invention, at least one rule is defined for each dimension to determine values for the configuration items of said dimension. If a dimension is related to one parameter or one combination of parameters, the respective rules are associated with said one parameter or said one combination of parameters.

With reference to the embodiment of the invention described herein, as may be take from the above table, for each dimension of dimensions DIM1, DIM2 and DIM3 rules RULE1, RULE2, and RULE3 have been defined to determine values for the configuration items of said dimension. In the present embodiment, as shown in Table 2 below, rule RULE1 of dimension DIM1 is not related to a parameter or a parameter combination, i.e. the values for configuration items A and D are determined independent of parameters. Rule RULE2 of dimension DIM2 has been defined taking into consideration a first parameter PARA1. Rule RULE3 of dimension DIM3 has been defined taking into consideration first and second parameters PARA1 and PARA2. The definitions of the rules described above may also be taken from the following Table 2.

**Table 2**

| | | |
|---|---|---|
| RULE1 | A = A | ⁻ |
| | D = D | ⁻ |
| RULE2 | B = B(PARA1) | PARA1 = <DEFAULT1> |
| | C = C(PARA1) | |
| RULE3 | E = E(PARA1, PARA2) | PARA1 = <DEFAULT1> |
| | F = F(PARA1, PARA2) | PARA2 = <DEFAULT2> |

According to the above table, the configuration server 1 determines values for configuration items A and D without taking into consideration any parameter. The configuration server 1 determines values for configuration items B and C by applying rule RULE2 taking into consideration parameter PARA1. By applying rule RULE3 the configuration server 1 determines values for configuration items E and F taking into consideration parameters PARA1 and PARA2. If the client 2 does not transmit one or more of the parameters PARA1 and PARA2, the configuration server 1 refers to a default value <DEFAULT1> and <DEFAULT2> for the missing parameter in order to determine a value for a configuration item for which a rule has been defined referring to the respective missing parameter.

Generally, according to an embodiment, the configuration server 1 determines values for configuration items by applying rules defined for individual dimensions to which the configuration items have been assigned, respectively, taking into consideration any parameter or parameter combination if associated with the respective dimension or rule.

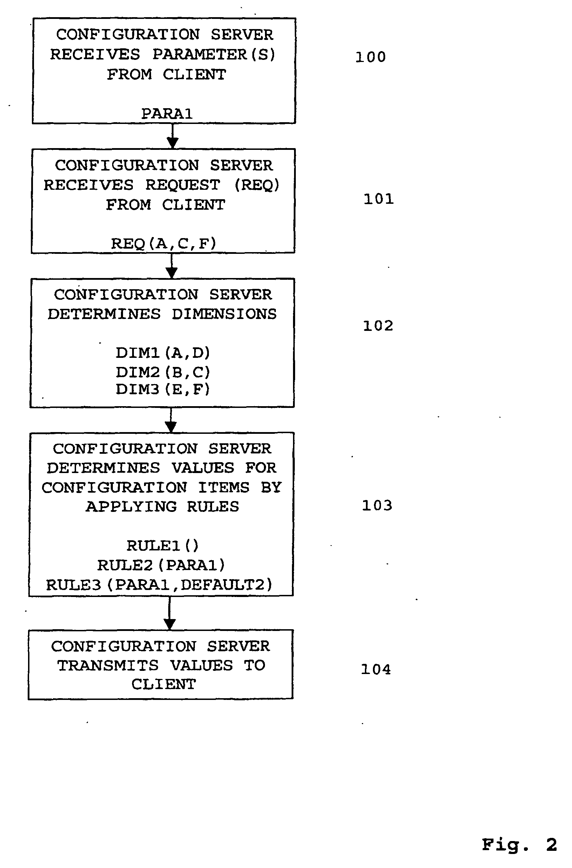

With reference to Fig. 2, a method for providing values for requested configuration items by a configuration server according to an embodiment will be described by means of example and with reference to the embodiment described in detail above.

In an operation 100, the configuration server 1 receives a parameter or a combination of parameters from a client 2. In the given example of Fig. 2 , the configuration server 1 receives parameter PARA1 from a client 2.

It should be noted that the client 2 may transmit the parameter or the combination of parameters only during an initial phase of the communication with the configuration server 1, for example during a log-on phase which is typically needed for identification and/or authorization purposes.

In an operation 101, the configuration server 1 receives from the client 2 a request to provide values for configuration items, for example a request REQ(A,C,F) to provide values for configuration items A, C, and F.

In an operation 102, the configuration server 1 determines to which dimension the configurations items are assigned. In the given example, the configuration server 1 determines that configuration item A is assigned to dimension DIM1, that configuration item C is assigned to dimension DIM2 and that configuration item F is assigned to dimension DIM3.

In an operation 103, the configuration server 2 determines values for the configuration items by applying rules associated with the dimensions and taking into consideration parameters. In the example shown, the configuration server 2 determines a value for configuration item A by applying rule RULE1, a value for configuration item C by applying rule RULE2 and a value for configuration item F by applying rule RULE3. When applying rule RULE2 the configuration server 1 uses the parameter PARA1 received from the client 2. When applying rule RULE3 then configuration server 1 uses parameter PARA1 and, since the client has not transmitted a parameter PARA2, the default value <DEFAULT2> is used instead.

In an operation 104, the configuration server 1 transmits the values for the configuration items, in the given example values for A, C, and F, to the client 2.

In the following, the operation 103 of determining values for configuration items by applying a rule RULEx defined for a dimension DIMx of configuration items will described in further detail by means of example.

In a first example, rule RULE1 relates to only a single parameter, i.e. parameter PARA1 which may assume one of the values 1, 2 or 3 as shown in Table 3 below. Further, as may also be taken from Table 3 below, rule RULE1 relates to dimension DIM1 comprising configuration items A and B.

**Table 3**

| **RULE1** | **Configuration Items** | |
|---|---|---|
| PARA1 | A | B |
| 1 | 60 | VGA |
| 2 | 70 | VGA |
| 3 | 90 | SVGA |

Determining one or more values for configuration items in response to a request from a client is performed by the configuration server of this example as follows: Whenever a client 2 transmits the value '1' for parameter PARA1, the configuration server 2 retrieves the value '60' for configuration item A and the value 'VGA' for configuration item B. Whenever a client 2 transmits the value '2' for parameter PARA1, the configuration server 2 retrieves the value '70' for configuration item A and the value 'VGA' for configuration item B. Whenever a client 2 transmits the value '3' for parameter PARA1, the configuration server 2 retrieves the value '90' for configuration item A and the value 'SVGA' for configuration item B. If a client 2 fails to transmit a value for parameter PARA1 but still sends a request to the configuration server 1 to provide values for one or both of the configuration items A and B, a default value is used for parameter PARA1, for example the value '1'. Thus, whenever the configuration server 1 is requested to provide values for one or both of the configuration items A and B by a client 2, the configuration server 1 may determine predetermined values in accordance with a rule defined for the dimension of configuration items A and B of which at least one was requested by the client 2.

In a second example, rule RULE1 relates to two parameters, i.e. parameters PARA1 and PARA2 of which parameter PARA1 may assume one of the values '1' or '2' and of which parameter PARA2 may assume one of the values '3' or '4'. Accordingly, four unique pairings of the values of parameters PARA1 and PARA2 can be defined, for example as shown in Table 4 below. Further, as may also be taken from Table 4 below, rule RULE1 relates to a dimension DIM1 consisting of three configuration items A, B and C.

**Table 4**

| **RULE1** | | **Configuration Items** | | |
|---|---|---|---|---|
| PARA1 | PARA2 | A | B | C |
| 1 | 3 | 60 | 2 | 640x480 |
| 1 | 4 | 70 | 16 | 800x600 |
| 2 | 3 | 80 | 256 | 1024x768 |
| 2 | 4 | 90 | 32768 | 1152x768 |

Determining values for one or more than one configuration item in response to a request from a client is performed by the configuration server of this example as follows: Whenever a client 2 transmits the value '1' for parameter PARA1 and the value '3' for parameter PARA2, the configuration server 1 retrieves the value '60' for configuration item A, the value '2' for configuration item B and the value '640x480' for configuration item C. Whenever a client 2 transmits the value '1' for parameter PARA1 and the value '4' for parameter PARA2, the configuration server 1 retrieves the value '70' for configuration item A, the value '16' for configuration item B and the value '800x600' for configuration item C. Whenever a client 2 transmits the value '2' for parameter PARA1 and the value '3' for parameter PARA2, the configuration server 1 retrieves the value '80' for configuration item A, the value '256' for configuration item B and the value '1024x768' for configuration item C. Whenever a client 2 transmits the value '2' for parameter PARA1 and the value '4' for parameter PARA2, the configuration server 1 retrieves the value '90' for configuration item A, the value '32768' for configuration item B and the value '1152x768' for configuration item C. If a client 2 fails to transmit a value for parameter PARA1 and/or parameter PARA2 but still sends a request to the configuration server 1 to provide values for one or more than one of the configuration items A, B and C, a default parameter is used for parameters PARA1 and/or PARA2, for example the values '1' and '3'. Thus, whenever the configuration server 1 is requested by a client 2 to provide values for one or more than one of the configuration items A, B and C, the configuration server 1 may determine predetermined values in accordance with a rule defined for the dimension of configuration items A, B and C of which at least one was requested by the client 2.

It should be noted that the configuration server 1 may be adapted to retrieve values for only those configuration items which are requested by the client 2. For example, if the client 2 requests configuration items A and C, the configuration server 1 may be arranged to retrieve values for configuration items A and C only, i.e. omitting any retrieving operation for configuration parameter B which also belongs to the dimension consisting of configuration items A, B and C.

Further, the rules according to the embodiment of the invention have been described above by means of example. Different rules, even rules with higher complexity may be employed in a configuration server according to the embodiment of the invention as long as these rules are defined to allow determination of values for requested configuration items when applied by the configuration server.

In the following, again referring to Fig. 1, the elements of the client / server environment as discussed above for explaining an embodiment of the present invention will be described in further detail.

The configuration server 1 may be a data processing device having large capacity for serving a large number of clients 2 communicating with the configuration server via the communication network 3.

As mentioned above the configuration server 1 includes communication unit 6 which may comprise a receiving unit 7 and a transmitting unit 8, all of which may comprise or may be included in or may be constituted by one or more code sections containing instructions for performing communicating, receiving and transmitting operations with respect to the communication network 3 for communicating with one or more clients 2.

The configuration server 1 includes a retrieving unit 9 which may comprise a first and a second determining unit 10 and 11, all of which may comprise or may be included in or may be constituted by one or more code sections including instructions for performing retrieving and first and second determining operations with respect to values for configuration items of configuration data stored in the storage unit 4 and in accordance with the operations described above.

The configuration server 1 has access to the data storage unit 4 which may comprise or may be included in or may be constituted by random access memory (RAM), a hard disc drive, a drive array (RAID) or any other form of a data storage device which can be accessed by the data retrieving unit 9 of the configuration server 1. In Fig. 1 the data storage unit 4 is shown to be provided external to the configuration server 1, however the configuration server 1 may also comprise the data storage unit 4 internally.

It is noted that a computer readable medium may be provided having a program embodied thereon, where the program is to make a computer or system of data processing devices execute instructions of the described embodiments of the invention, particularly of the communication unit, which may comprise a receiving unit and a transmitting unit and the retrieving unit, which may comprise a first and a second determining unit, of the configuration server. A computer readable medium can be a magnetic or optical or other tangible medium on which a program is recorded, but can also be a signal, e.g. analog or digital, electromagnetic or optical, in which the program is embodied for transmission.

Further, a computer program product may be provided comprising the computer readable medium.

According to another embodiment of the invention, a server for providing configuration data values in a client/server data processing environment may have the following structural elements:
1) Configuration server for providing values for configuration items of configuration data in a client/server data processing environment comprising:
   one or more code sections containing instructions for receiving from a client (2) a request (REQ) to provide values for configuration items (A, B, C, D, E, F) of said configuration data;
   one or more code sections containing instructions for determining for each of said requested configuration items the respective one of one or more dimensions (DIM) to which the configuration items of said configuration data have been assigned such that a configuration item is assigned to exactly one of said dimensions;
   one or more code sections containing instructions for determining values for each of said configuration items by
   one or more code sections for applying rules (RULE) associated with said dimensions; and
   one or more code sections containing instructions for transmitting the values to said client (2).
2) Configuration server according to 1) including:
   one or more code sections containing instructions for receiving from a client (2) at least one parameter (PARA).
3) Configuration server according to 1) or 2) wherein the instructions are such that the applying of said rules (RULE) comprises the taking into consideration of at least one parameter.
4) Configuration server according to 1) to 3) wherein the instructions are such that the applying of said rules (RULE) comprises the using of a default value (DEFAULT).
5) Configuration server according to 1) to 4) wherein the instructions are such that the configuration server (1) receives said at least one parameter from a plurality of clients (2).
6) Configuration server according to 1) to 5) wherein the instructions are such that the configuration server (1) receives said request (REQ) for providing values for configuration items from a plurality of clients (2).
7) Configuration server according to 1) to 6) wherein the instructions are such that the configuration server (1) receives said request (REQ) for providing values for configuration items via a communication network (3), especially the Internet.

In the following, a further embodiment will be described by means of a detailed example. Each of the database tables below may be implemented by means of a flat file database, a table oriented database, an relational database, an object oriented database or any other form of databases known in the art. The database tables may be stored on or in any kind of the storage means including servers.

In this embodiment, a group of users is registered in a user database table in which each user is identified by a *User-ID.* In the following Table 5 an example of such user database is shown comprising five users identified by the *User-ID* shown in the column USER-ID of the table. In other words, the users of the specific example described herein are Sabine, Martin, Anne, Frank and Peter.

**Table 5:**

| User Database Table | | | |
|---|---|---|---|
| **USER-ID** | **RANK** | **ROLES** | **LANGUAGES** |
| Sabine | Manager | Admin, PowerUser, User | de, en, fr |
| Martin | Director | User | en |
| Anne | Employee | Developer, PowerUser, User | fr, de-AT |
| Frank | Manager | Developer, User | de |
| Peter | Employee | PowerUser, User | en, de |

From the above Table 5 it can be taken that the user database table of the embodiment described herein comprises further the columns RANK, ROLES and LANGUAGES. Each column represents not only one of the fields in the database but also describes for each individual user a value for a specific attribute. Said attributes are defined for each to user to describe specific characteristics or properties of each user within the environment of the example embodiment.

For each user a rank is defined by a respective entry in the column RANK as shown above. For example, user Sabine is of the rank *Manager,* user Martin is of the rank *Director* and user Anne is of the rank *Employee.* Similarly to the column RANK one or more roles are assigned to each user as indicated by the entry in the column ROLES. For example, the roles *Developer* and *User* have been entered in the column ROLES for user *Frank.* Similarly to the columns RANK and ROLES one or more entries in the column LANGUAGES define the languages for each user. For example, the languages *fr* (i.e. the French language) and *de-AT* (i.e. the German language as spoken in Austria) have been defined for user Anne.

Regarding the notation of the values shown in the column LANGUAGES it should be noted that each value of the present example embodiment consists of a main language indicated by the first two characters. In detail, main language en represents the English language, main language *de* represents the German language, and main language *fr* represents the French language. Further languages may be added, for example main language es representing the Spanish language or main language ru representing the Russian language.

Further, still regarding the notation, each value in the column LANGUAGES may comprise a sub-language in order to represent a specific vocabulary, spelling or manner of speaking. For example, sub-language *AT* in combination with main language de represents the German language as used and spoken in Austria. Sub-language *US* in combination with main language en represents the English language as used and spoken in the USA.

In a client device database table, client devices are registered as shown in the following Table 6 representing an example of such client device database table.

**Table 6:**

| Client Device Database Table | |
|---|---|
| **TYPE** | **DEVICE CLASS** |
| Nokia 123 | CellPhone |
| WebBrowser | PC |
| Ericssen AB | CellPhone |
| Psion | Handheld |
| Super-TV-Box | SettopBox |
| ActiveX-Control | PC |
| Siemens 4711 | CellPhone |
| Desktop | PC |
| Palm | Handheld |

In the column TYPE several different client devices are indicated by means of a descriptive term uniquely identifying said client device. However, it should be noted that several client devices of this type may be used, for example user *Sabine* and *Martin* may use the cellular phone of the type *Nokia 123,* but still it is required to register the client device type only once in the client device database table.

An entry in the column DEVICE CLASS of the client device database table indicates to which device class an individual client device has been assigned. For example, the client device types *Nokia 123, Ericsson A* and *Siemens 4711* are assigned to device class *CellPhone* indicating that these client devices are celluar phones or mobile phones (or a similar device that can be assigned to this device class). Similarly, the client devices *WebBrowser, ActiveX-Control* and *Desktop* are designed to device class *PC* indicating that these client devices are usually implemented by means of a personal computer (PC) or software running on a personal computer (PC). In the example shown above, the client device types *Psion* and *Palm* are assigned to the device class *Handheld,* indicating that client devices of this type are handheld computers. Finally, in the example above, the client device type *Super-TV-Box* is assigned to the device class *SettopBox*. Indicating that client devices of this kind are understood to be peripheral devices used in conjunction with, for example TV sets.

It is assumed in the example described herein that the users mentioned above, when using any one of the client devices mentioned above, are users in the framework of a client/server system requiring specific configuration data in order to supply information to the individual user using a specific client device. The configuration data considered in detail in the embodiment described herein are listed in a data tree shown below.

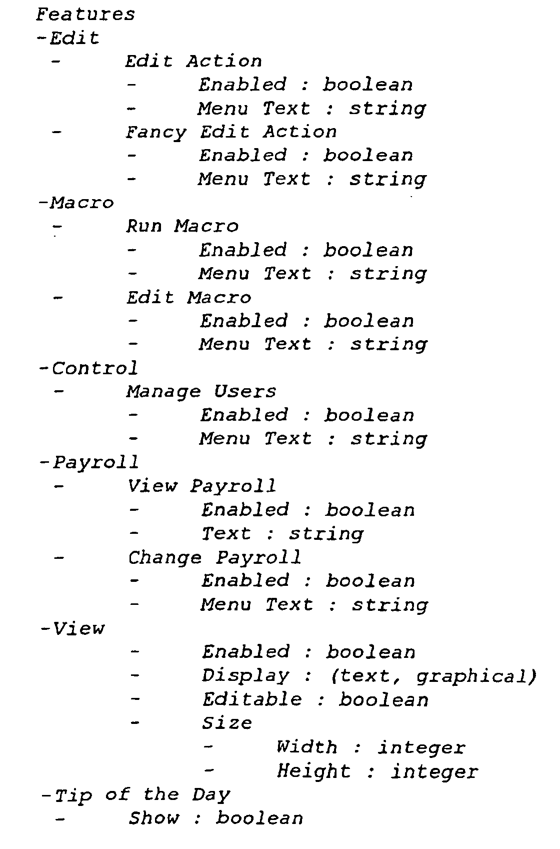

Each configuration item of the above configuration data tree is defined by its position in the data tree and by the data type which is indicated by being separated by a colon. Therefore, the above data tree comprises the following individual configuration items:
Features/Edit/Edit Action/Enabled
Features/Edit/Edit Action/Text
Features/Edit/Fancy Edit Action/Enabled
Features/Edit/Fancy Edit Action/Text
Features/Macro/Run Macro/Enabled
Features/Macro/Run Macro/Text
Features/Macro/Edit Macro/Enabled
Features/Macro/Edit Macro/Text
Features/Control/Manage Users/Enabled
Features/Control/Manage Users/Text
Features/Payroll/View Payroll/Enabled
Features/Payroll/View Payroll/Text
Features/Payroll/Change Payroll/Enabled
Features/Payroll/Change Payroll/Text
Features/View/Enabled
Features/View/Display
Features/View/Editable
Features/View/Size/Width
Features/View/Size/Height
Features/Tip of the Day/Shown

It becomes apparent from the above list of configuration items that the data tree shown further above is the structured representation of the configuration items as shown in the above list.

In the embodiment described herein, each configuration item is assigned to a dimension. In the following, the configuration items are listed according to the dimension they have been assigned to.
Dimension: *Default*
   Features/Tip of the Day/Show
Dimension: *DeviceCaps*
   Features/View/Display
   Features/View/Editable
Dimension: *DevicePrefs*
   Features/View/Size/Width
   Features/View/Size/Height
Dimension: *Function*
   Features/Edit/Edit Action/Enabled
   Features/Edit/Fancy Edit Action/Enabled
   Features/Macro/Run Macro/Enabled
   Features/Macro/Edit Macro/Enabled
   Features/Control/Manage Users/Enabled
   Features/View/Enabled
Dimension: *Level*
   Features/Payroll/View Payroll/Enabled
   Features/Payroll/Change Payroll/Enabled
Dimension: *Language*
   Features/Edit/Edit Action/Menu Text
   Features/Edit/Fancy Edit/Action/Menu Text
   Features/Macro/Run Macro/Menu Text
   Features/Macro/Edit Macro/Menu Text
   Features/Control/Manage Users/Menu Text
   Features/Payroll/View Payroll/Menu Text
   Features/Payroll/Change Payroll/Menu Text

In the following a structured representation of the configuration items in the data tree is given as further above, however, including the dimensions as shown above.

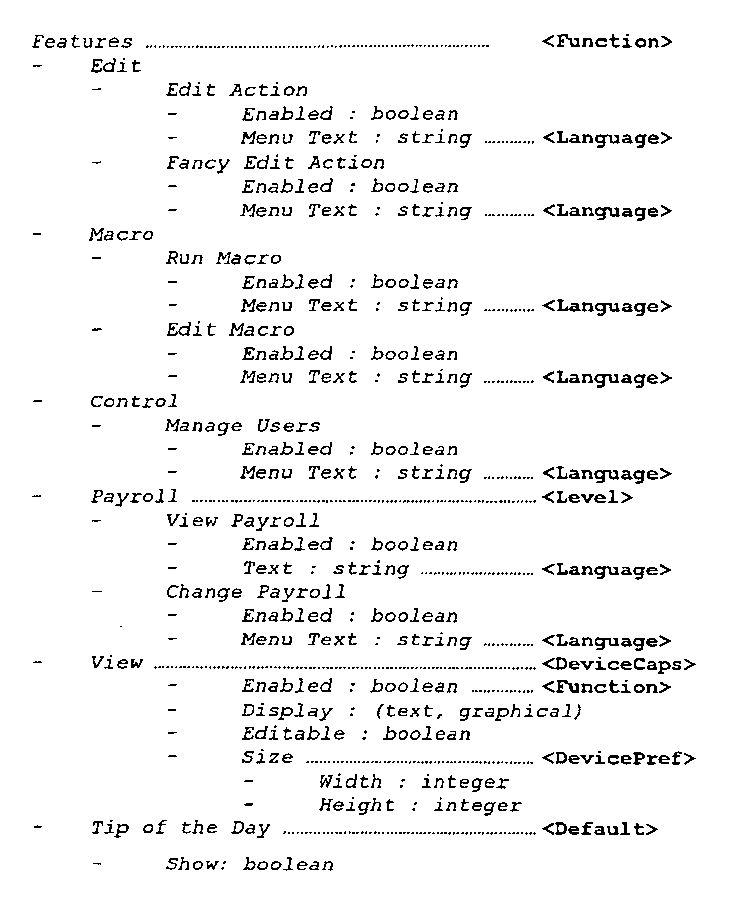

In the following configuration items database tables will be described which are used to store individual data or default data for specific configuration items as will become apparent from the following detailed description of specific examples.

The first example of a configuration items database table is the user preferences database table as shown in Table 7 below.

**Table 7:**

| User Preferences Database Table | | |
|---|---|---|
| **USER-ID** | **CONFIGURATION ITEM** | **VALUE** |
| * | Features/Tip of the Day/Show | TRUE |
| Anne | Features/Tip of the Day/Show | FALSE |
| Sabine | Features/Tip of the Day/Show | FALSE |
| Martin | Features/Tip of the Day/Show | FALSE |
| Frank | Features/Tip of the Day/Show | TRUE |

In a column USER-ID, a *User-ID* is stored to identify the user to whom the data stored in the columns CONFIGURATION ITEM and VALUE are assigned. In the first line of the user preferences database table a symbol * indicates that for each user who cannot be found in the subsequent lines of the user preferences database table the value of the first line, i.e. TRUE is used by default for the configuration item *FeatureslTip of the Day*/*Show.* Accordingly, for user Peter the configuration item *Features*/*Tip of the Day Show* is set to TRUE by default as Peter is not listed in the user preferences database table. For users *Anne, Sabine,* and *Martin* an entry is shown in the user preferences database table so that the configuration item *Features*/*Tip of the Day*/*Show* is set to FALSE, as shown in the column VALUE of the user preferences database table. Also for user *Frank* an entry is provided in the user preferences database table so that the configuration item *Features*/*Tip of the Day*/*Show* is set to TRUE.

A further database table included in the embodiment described herein is the device class configuration items database table in which for each device class as defined in the client database table specific values for the relevant configuration items are given. It should be noted that in the device class configuration items database table the column DEVICE CLASS identifies the device class as mentioned in the client device database table (Table 6) in the column DEVICE CLASS, respectively.

**Table 8:**

| Device Class Configuration Items Database Table | | |
|---|---|---|
| **DEVICE CLASS** | **CONFIGURATION ITEM** | **VALUE** |
| PC | Features/View/Size/Width | 800 |
| | Features/View/Size/Height | 600 |
| | Features/View/Display | graphic |
| | Features/View/Editable | TRUE |
| Handheld | Features/View/Size/Width | 200 |
| | Features/View/Size/Height | 50 |
| | Features/View/Display | graphic |
| | Features/View/Editable | TRUE |
| CellPhone | Features/View/Size/Width | 20 |
| | Features/View/Size/Height | 5 |
| | Features/View/Display | text |
| | Features/View/Editable | FALSE |
| Settop Box | Features/View/Size/Width | 876 |
| | Features/View/Size/Height | 657 |
| | Features/View/Display | graphic |
| | Features/View/Editable | FALSE |

For example, in the device class configuration items database table (Table 8) it is noted for the device class *CellPhone* that the configuration item *Features*/*View*/*Size*/*Width* has the value 20, the configuration item *Features*/*View*/*Size*/*Height* has the value 5, the configuration item *Features*/*View*/*Display* has the value *text* and the configuration item *Features*/*View*/*Editable* has the value FALSE*.* This can be interpreted to describe that a client device of the device class *CellPhone* is provided with a display area having a width of 20 character positions and a height of 5 character positions and is capable of displaying text only. Also, the text displayed in the 20 x 5 display area cannot be edited by the user of a client device of the device class *CellPhone.*

Further, in the device class configuration items database table (Table 8) it is noted for the device class *PC* that the configuration item *Features*/*View*/*Size*/*Width* has the value *800*, the configuration item *Features*/*View*/*Size*/*Height* has the value *600,* the configuration item *Features*/*View*/*Display* has the value *graphic* and the configuration item *Features*/*View*/*Editable* has the value *TRUE.* This can be interpreted to describe that a client device of the device class *PC* is provided with a display area having a width of 800 pixels and a height of 600 pixels and is capable of displaying graphics. Further, the 800 x 600 pixel display area allows the user of a client device of the device class *PC* to edit the information on the display.

The values shown in the device class configuration items database table are typical values which may, however, been overwritten by values for specific client devices as stored in a client device preferences database table shown below.

**Table 9:**

| Client Device Preferences Database Table | | |
|---|---|---|
| **CLIENT TYPE** | **CONFIGURATION ITEM** | **VALUE** |
| Siemens 4711 | Features/View/Size/Width | 40 |
| | Features/View/Size/Height | 16 |
| Nokia 123 | Features/View/Editable | TRUE |

In the column CLIENT TYPE, those client device types are mentioned for which specific configuration data values are different from the values shown in the device class configuration items database table (Table 8) for the respective device class to which the client device type has been assigned in the client database table (Table 6).

In other words, by means of example, for the client type *Siemens 4711* it is noted in the client database table (Table 6) that this client type is of the device class *CellPhone.*

Therefore, the device class configuration items database table (Table 8) shows that the values given for the device class *CellPhone* should be used for the configuration items given column CONFIGURATION ITEM. However, for the client type *Siemens 4711* different values are stored for the configuration items as shown in the column CONFIGURATION ITEM of the client device preferences database table (Table 9).

**Table 10:**

| User Device Preferences Database Table | | |
|---|---|---|
| **USER-ID** | **CONFIGURATION ITEM** | **VALUE** |
| Anne | Features/View/Size/Width | 1024 |
| | Features/View/Size/Height | 768 |

In the column USER-ID, the user is identified such that for any configuration item listed in the column CONFIGURATION ITEM a user specific value as given in column VALUE can be obtained. Thus, it can be taken from the above Table 10 that for user Anne the value 1024 is stored for the configuration item *Features*/*View*/*Size*/*Width* and the value 768 is stored for the configuration item *Features*/*View*/*Size*/*Height*.

In the embodiment described herein, the roles mentioned in the user database table (Table 5) above are linked to configuration items according to the functional roles database table (Table 11) shown below.

**Table 11:**

| Functional Roles Database Table | |
|---|---|
| **CONFIGURATION ITEM** | **ROLES** |
| Features/Edit/Edit Action/Enabled | PowerUser, User |
| Features/Edit/Fancy Edit Action/Enabled | PowerUser |
| Featues/Macro/Run Macro/Enabled | Admin, Developer, PowerUser |
| Features/Macro/Edit Macro/Enabled | Developer |
| Features/Control/Manage Users/Enable | Admin |
| Features/View/Enabled | Admin, Developer, PowerUser, User, |
| | Guest |

For example, the roles *Admin, Developer,* and *PowerUser* are linked to the configuration item *Features*/*Macro*/*Run Macro*/*Enabled* to set this configuration item to *TRUE* if any one of the roles mentioned in the column ROLES (i.e. *Admin, Developer, PowerUser)* is assigned to a specific user mentioned in the user database table (Table 5). This link can be interpreted to indicate that users having been assigned to anyone of the roles *Admin, Developer,* and *PowerUser* are allowed to run macros, i.e. executed a specific piece of software in the example scenario described herein. Similiary, only user of the role *Developer* are allowed to edit these macros as the functional roles database table shows that only for users of the role *Developer* the configuration item *Features*/*Macro*/*Edit Macro*/*Enabled* will be set to *TRUE.*

In the embodiment described herein, the entry in column RANK of the user database table (Table 5) is related to the column RANK of the required rank database table (Table 12) shown below.

**Table 12:**

| Required Rank Database Table | |
|---|---|
| **CONFIGURATION ITEM** | **RANK** |
| Features/Payroll/View Payroll/Enabled | Manager |
| Features/Payroll/Change Payroll/Enabled | Director |

The column RANK of the required rank database table (Table 12) defines which entry in the column RANK of the user database table (Table 5) is required to set the configuration item mentioned in column CONFIGURATION ITEM of required rank database table (Table 12) to true.

For example, the configuration item *Features*/*Payroll*/*View Payroll*/*Enabled* is set to *TRUE* if the required rank *Manager* is stored in column RANK of the user database table (Table 5). In the embodiment described herein user *Sabine* having the entry *Manager* in column RANK of the user database table (Table 5) is of the required rank *Manager* as shown in the required rank database table (Table 12). Therefore, user *Sabine* will have the configuration item *Features*/*Payroll*/*View Payroll*/*Enabled* set to *TRUE.* This can be interpreted to indicate that user *Sabine* is entitled to view data of a payroll.

In the embodiment described herein, the localized data database table (Table 13) contains information concerning language related configuration items which are stored in column CONFUIGURATION ITEM of the localized data database table.

**Table 13:**

| Localized Data Database Table | | |
|---|---|---|
| **CONFIGURATION ITEM** | **LANGUAGE** | **TEXT** |
| Features/Edit/Edit Action/Menu Text | en | Edit |
| | de | Bearbeiten |
| Features/Edit/Fancy Edit Action/Menu Text | en | Optimise garbage |
| | en-US | Optimize garbage |
| | de | Verschnitt optimieren |
| Features/Macro/Run Macro/Menu Text | en | Execute Macro |
| | de | Makro ausführen |
| Features/Macro/Edit Macro/Menu Text | en-US | Macro Editor |
| Features/Control/Manage Users/Menu Text | fr | Administrer |
| Features/Payroll/View Payroll/Menu Text | de | Gehaltslisten |
| | de-AT | Lohnkartei |
| | en | View Salaries |
| Features/Payroll/Change Payroll/Menu Text | en | Adjust Salaries |
| | ru | Obrabotat'sarplatu |

For each entry in the column CONFIGURATION ITEM of the localized data database table (Table 13) a value mentioned in column TEXT is defined in accordance with an entry in column LANGUAGE so that for each configuration item a text can be derived in a specific language.

For example, the configuration item *Features*/*Edit*/*Fancy Edit Action*/*Menu Text* is defined to have the menu text "Optimise garbage" if the language is *en.* If language is *en-US,* the menu text for configuration item *Features*/*Edit*/*Fancy Edit Action*/*Menu Text* is set to "Optimize garbage". If language is de the menu text is set to "Verschnitt optimieren", respectively.

In the following the rules will be described for the embodiment described herein.

First, a set of common rules is shown in Table 14, which rules are to be understood to be basic rules and which may be used to define further rules at a higher level.

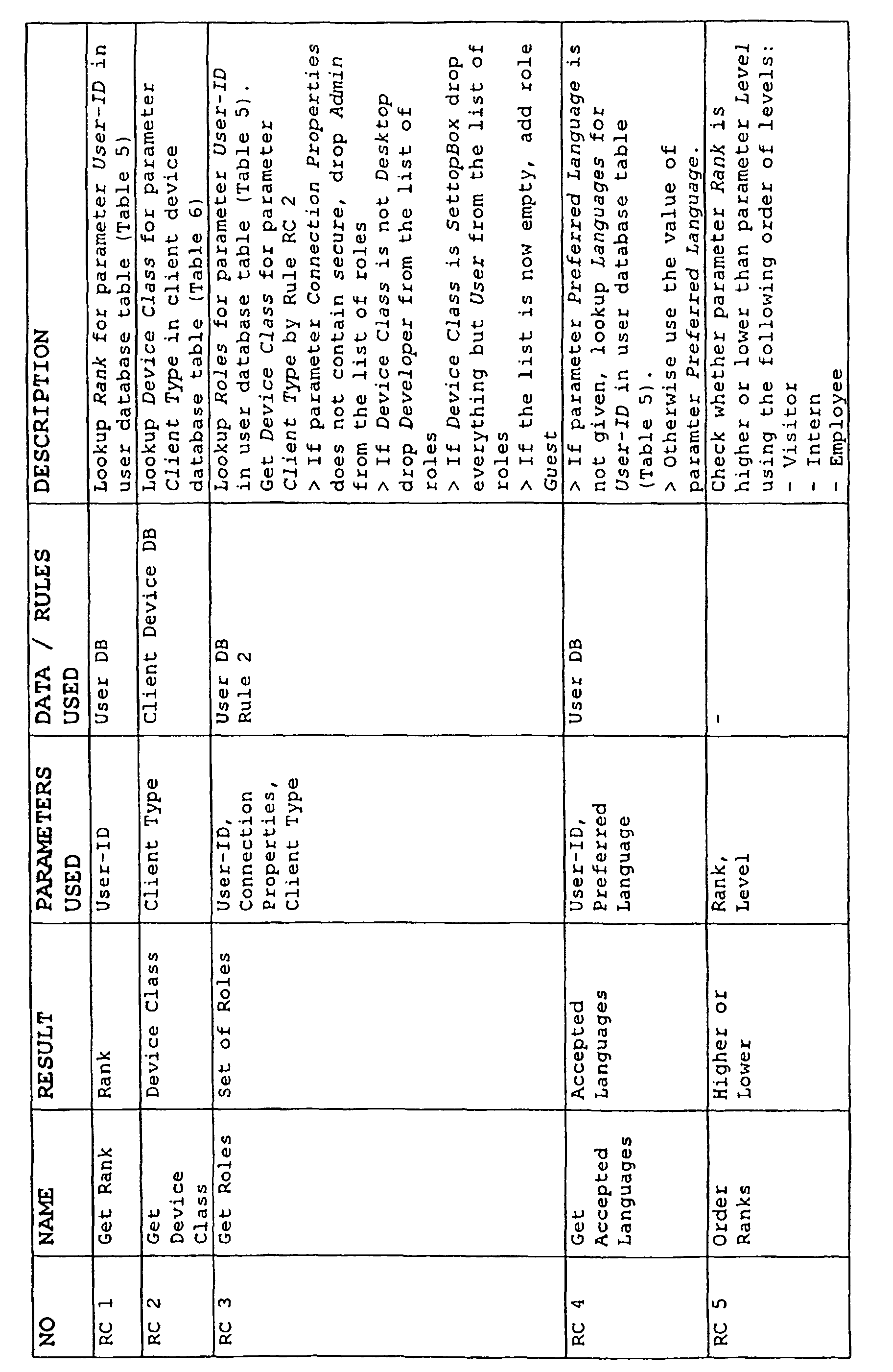

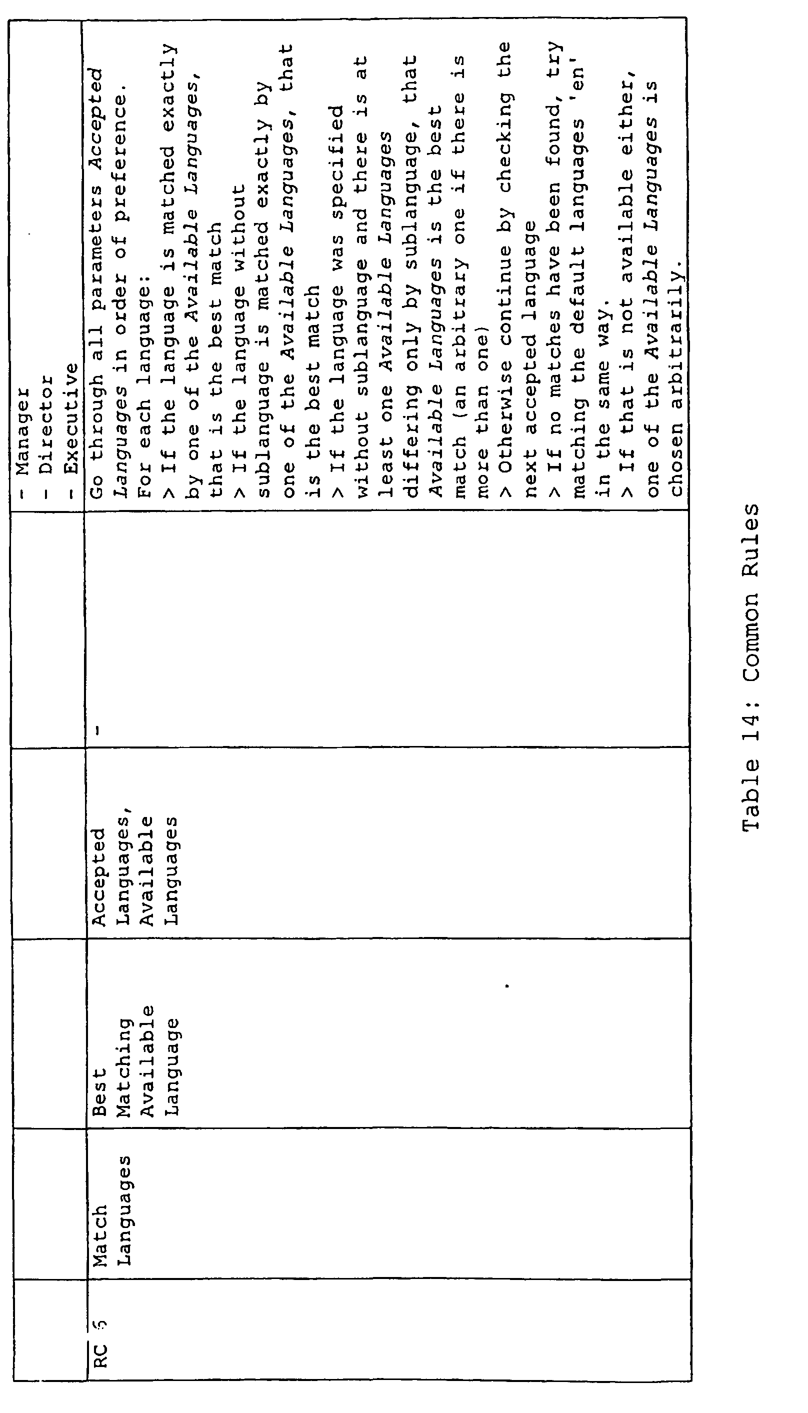

Rule RC 1 (Get Rank) uses the parameter *User-ID* to access the user database table (Table 5) in order to retrieve the *Rank* of the user identified by the parameter *User-ID.* Rule RC 1 returns as a result the *Rank* as looked up in the user database table (Table 5).

Rule RC 2 (Get Device Class) uses the parameter *Client Type* to access the client device database table (Table 6) in order to retrieve the *Device Class* for the *Client Type.* Rule RC 2 returns as a result the *Device Class* as looked up in the client device database table (Table 6).

Rule RC 3 (Get Roles) uses the parameters *User-ID, Connection Properties,* and *Client Type* in order to access the user database table (Table 5) and to apply rule RC 2 handing over parameter *Client Type.* According to Rule RC 3 the *Roles* for the *User-ID* are looked up in the user database table (Table 5). Further, the *Device Class* is obtained on the basis of the *Client Type* by calling Rule RC 2. If *Connection Properties* do not contain *secure,* the role *Admin* is dropped from the list of roles which has been looked up previously in the user database table (Table 5). If *Device Class* is not *Desktop,* the role *Developer* is dropped from the list of roles as looked up in the user database table (Table 5). If the *Device Class* is *SettopBox* all roles but the role *User* is dropped from the list of roles as looked up in the user database table (Table 5). If the list of roles is now empty, the role *Guest* is added to the list of roles. Rule RC 3 returns as a result a set of roles.

Rule RC 4 (Get Accepted Languages) uses parameters *User-ID* and *Preferred Language* to access the user database table (Table 5). If the parameter *Preferred Language* is not given, the language is looked up for the *User-ID* in the user database table (Table 5). Otherwise, the parameter *Preferred Language* is used. Rule RC 4 returns as a result the *Accepted Languages.*

Rule RC 5 (Order Ranks) uses parameters *Rank* and *Level.* According to Rule RC 5 it is checked whether parameter *Rank* is higher/equal or lower than parameter *Level* using the order of levels as shown in Table 14. Rule RC 5 returns as a result one of the values *higher* or *lower.*

Rule RC 6 (Match Languages) uses parameters *Accepted Languages* and *Available Languages.* Each of the *Accepted Languages* is processed in the order of preference and for each language the following operations are performed.

If the language is matched exactly by one of the Available Languages, this language is accepted as the best match. For example, if the language is "en-US" (i.e. US English) and one of the available languages is "en-US", then "en-US" is the best match.

If the language without sub-language is matched exactly by one or the *Available Languages,* this language is considered the best match. For example, if the language is "en-US" (i.e. US English) and only "en" (i.e. English) is available as a language, then "en" is considered the best match.

If the language was specified without sub-language and there is at least one *Available Languages* differing only by sub-language, that language is considered the best match. An arbitrary one is considered the best match if there is more than one. For example, if the language "en" was specified and an available language is "en-US" then "en-US" is considered the best match.

If no matches were found the default language "en" is used to find the best match in the same way. If a best match cannot be found also on the basis of the default langue "en", one of the available languages is chosen arbitrarily.

In the Table 15 below a set of default rules is shown.

**Table 15:**

| Default Rules | | | | | |
|---|---|---|---|---|---|
| **NO** | **NAME** | **RESULT** | **PARAMETERS USED** | **DATA/ RULES USED** | **DESCRIPTION** |
| Def 1 | Get User Value | Value or nothing | Key User-ID | Config. Items DB | Lookup *Key* for *User-ID* in user preferences table (Table 7) |
| Def 2 | Get Default Value | Value | Key | Config. Items DB | Lookup *Key* for User-ID * in user preferences table (Table 7) |
| DEF | Default Value | Value | Key User-ID | Def 1 Def 2 | Try to get Value for Key by applying rule Def 1 If Def 1 returned no *Value,* get *Value* for *Key* by applying rule Def 2 |

Rule Def 1 (Get User Value) uses the parameters *Key* and *User-ID* to access the user preference database table (Table 7) in order to retrieve a Value for a specific configuration item for individual users. Rule Def 1 returns a *Value* for a configuration item as looked up in the user preferences database table (Table 7) or nothing.

Rule Def 2 (Get Default Value) uses parameter *Key* to access the user preferences database table (Table 7) to look up the default value for a specific key and using the user-ID *. Rule Def 2 returns a Value for a configuration item as looked up in the user preferences database table (Table 7).

Rule DEF (Default Value) uses parameters *Key* and *User-ID* and applies rules Def 1 and Def 2 to obtain a value for the *Key* via rule Def 1 to obtain a user specific value or via rule Def 2 to obtain the default value.

In the following Table 16 device rules are shown.

**Table 16:**

| Device Rules | | | | | |
|---|---|---|---|---|---|
| **NO** | **NAME** | **RESULT** | **PARAMETERS USED** | **DATA/ RULES USED** | **DESCRIPTION** |
| Dev 1 | Get User Value | Value or nothing | Key User-ID | Config. Items DB | Lookup *Key* for *User-ID* in user device preferences table (Table 10) |
| Dev 2 | Get Device Value | Value or nothing | Key Client Type | Config. Items DB | Lookup *Key* for Client *Type* in client device preferences table (Table 9) |
| Dev 3 | Get Class Value | Value | Key Client Type | Config. Items DB RC 2 | Get *Device Class* for *Client type* from RC 2. Lookup *Key* in for *Device Class* in device class configuration items table (Table 8). |
| DEV-C | Device Caps Value | Value | Key Client Type | Dev 2 Dev 3 | Try to get *Value* for *Key* by applying rule Dev 2. If Dev 2 returned nothing, try to get *Value* for *Key* by applying rule Dev 3. |
| DEV-P | Device Prefs Value | Value | Key User-ID Client Type | Dev 1 Dev 2 Dev 3 | Try to get *Value* for *User-ID* and *Key* by applying rule Dev 1. If Dev 1 returned nothing, try to get *Value* for *Key* by applying rule Dev 2. If Dev 2 returned nothing, get *Value* for Key by applying rule Dev 3 |

Rule Dev 1 (Get User Value) uses parameter *Key* and *User-ID* to access the user preferences database table (Table 7) to look up configuration items for a specific *Key* for the given *User-ID.* Rule Dev 1 returns a *value* for the specific configuration item as looked up in the user preferences database table (Table 7) or nothing.

Rule Dev 2 (Get Device Value) uses parameters *Key* and *Client Type* to access the device class configuration items database table (Table 8) to look up a *Value* for the specific *Key* and the given *Client Type.* Rule Dev 2 returns a *Value* for the specific configuration item as looked up in the device class settings database table (Table 8) or nothing.

Rule Dev 3 (Get Class Value) uses parameters *Key* and *Client Type* to access the device class configuration items database table (Table 8) and to apply common rule RC 2. First, the *Device Class* is obtained by applying rule RC 2 for the specific *Client Type.* Then, the value is looked up for a specific key for the *Device Class* in the device class configuration items database table (Table 8). Rule Dev 3 returns a *Value* for specific configuration item as looked up in the device class configuration item database table (Table 8).

Rule DEV-C (Device Caps Value) uses parameters *Key* and *Client Type* to apply rules Dev 2 and Dev 3. By applying rule Dev 2 a *Value* for *Key* can be obtained. If no *Value* is obtained, rule Dev 3 is applied to obtain a *Value* for *Key*.

Rule DEV-P (Device Prefs Value) uses parameters Key, User-ID and Client Type to apply rules Dev 1, Dev 2 and Dev 3. First, a *Value* for *Key* and for *User-ID* is obtained by applying rule Dev 1. If no *Value* is obtained, Rule Dev 2 is called to obtain a *Value* for *Key.* If again no *Value* is obtained, Rule Dev 3 is called to obtain a *Value* for *Key.* Rule DEV-P returns as a result the *Value* obtained by applying rules Dev 1, Dev 2, and Dev 3.

**Table 17:**

| Function Rules | | | | | |
|---|---|---|---|---|---|
| **NO** | **NAME** | **RESULT** | **PARAMETERS USED** | **DATA/ RULES USED** | **DESCRIPTION** |
| FUNC | Function Enabled | Boolean Value | Key, User-ID, Connection Properties, Client Type | Config. Items DB RC 3 | Get *User Roles* for the parameters by applying rule RC 3. Lookup *Enabled Roles* for Key in functional roles table (Table 11). |
| | | | | | |
| | | | | | Result is *TRUE,* if the *Enabled Roles* contain at least one of the *User Roles,* and *FALSE* otherwise. |

In Table 17 above a function rule is shown which uses parameters *Key, User-ID, Connection Properties* and *Client Type* to access the functional roles database table (Table 11) and to apply rule RC 3. First, the *User Roles* for the parameters are obtained by applying rule RC 3. Thereafter, the *Enabled Roles* are looked up for *Key* in the functional roles database table (Table 11). As rule FUNC is defined to returns a boolean value, *TRUE* is returned as a result if the *Enabled Roles* contain at least one of the *User Roles.* Otherwise, *FALSE* is returned as a result.

**Table 18:**

| Level Rules | | | | | |
|---|---|---|---|---|---|
| **NO** | **NAME** | **RESULT** | **PARAMETERS USED** | **DATA/ RULES USED** | **DESCRIPTION** |
| LVL | Level Enabled | Boolean Value | Key, User-ID | Config. Items DB RC 1 RC 5 | Get *Rank* for *User-ID* by applying rule RC 1 Lookup *Required Level* for *Key* in required rank database table (Table 12) |
| | | | | | |
| | | | | | Compare *User Rank* to *Required Level* by applying rule RC 5 |
| | | | | | |
| | | | | | Result is *TRUE,* if the *User Rank* is *Higher, FALSE* if it is *Lower* |

In Table 18 level rules are shown. The rule LVL (Level Enabled) uses parameter *Key* and *User-ID* to access the required rank database table (Table 12) and to apply rules RC 1 and RC 5. First, by applying Rule RC 1 the *Rank* for a specific *User-ID* is obtained. Thereafter, the *Required Level* for *Key* is looked up in the required rank database table (Table 12). By applying rule RC 5 the *User Rank* is compared to the *required rank* and the boolean value *TRUE* is returned as a result if the *User Rank* is equal or higher than *Required Level.* Otherwise, the boolean value *FALSE* is returned as a result if the *User Rank* is lower.

**Table 19:**

| Language Rules | | | | | |
|---|---|---|---|---|---|
| **NO** | **NAME** | **RESULT** | **PARAMETERS USED** | **DATA/ RULES USED** | **DESCRIPTION** |
| LCL | Language Value | Value | Key, User-ID, Preferred Language | Config. Items DB RC 4 RC 6 | Get *Accepted Languages* for the parameters using RC 4 |
| | | | | | Lookup the *Available Languages* present for *Key* in localized data database table (Table 13) |
| | | | | | Find the best match for the *Accepted Languages* among the *Available Languages* using RC 6 |
| | | | | | Lookup the *Value* for the best *Language* and *Key* in localized data database table (Table 13) |

In Table 18 above language rules are shown. Rule LGL (Language Value) uses parameter *Keys, User-ID* and *Preferred Language* to access the localized data database table (Table 13) and to apply rules RC 4 and RC 6. By applying rule RC 4 the *Accepted Languages* are obtained. Then, the *Available Languages* present for *Key* are looked up in the localized data database table (Table 13) Thereafter, the best match for the *Accepted Languages* among the *Available Languages* is found by applying rule RC 6. Finally, a value is looked up for the best *Language* and *Key* in the localized data database table (Table 13) and returned as a result of rule LGL.

The following table (Table 19) describes the association of dimensions and rules, lists the parameters used in the rules and characterizes the parameter dependency of the dimension by naming the parameter combination(s) that are finally used as selector for the values.

**Table 20:**

| Dimensions and Rules | | | |
|---|---|---|---|
| **DIMENSION** | **RULE USED** | **PARAMETER USED** | **PARAMETER COMBINATIONS USED** |
| Default | DEF | User-ID | User-ID |
| DeviceCaps | DEV-C | Client Type | Client-Type, Device-Class |
| DevicePref | DEV-P | User-ID, Client Type | User-ID, Client-Type, Device Class |
| Function | FUNC | User-ID, Connection Properties, Client Type | Rules |
| Level | LVL | User-ID | Rank |
| Language | LCL | User-ID, Preferred Language | Accepted Languages |

As can be taken from the above Table 20, in the embodiment described herein, the dimension *Default* is associated with rule DEF, the dimension *DeviceCaps* is associated with rule DEV-C, the dimension *DevicePrefs* is associated with rule DEV-P, the dimension *Function* is associated with rule FUNC, the dimension *Level* is associated with rule LVL, and the dimension *Language* is associated with rule LGL. In order to obtain values for configuration items, the dimension of each configuration item and, thereafter, each rule assigned to each of said dimension can be determined. By applying the rules values for the configuration items can be obtained.

In the following, an example will be described on the basis of the database tables, rules and dimensions outlined above.

It will become apparent how data for the complete data tree above can be obtained for a given set of parameters.

For the example described below, the parameters given are:
- User-ID: = *Anne*
- Client Type: = *Palm*
- Connection Properties: = (*LAN, secure, high-bandwidth, low-latency*)

Regarding the dimension *Default,* a value for the configuration item *Features*/*Tip of the Day*/*Show* is obtained as follows.

According to Table 20 the rule assigned to dimension *Default* is rule DEF using the parameter User-ID = *Anne.* According to rule DEF as shown in Table 15 above, parameter Key = *Features*/*Tip of the Day*/*Show* and User-ID = *Anne* handed over to rule DEF and are used to apply rules Def 1 and Def 2 as described in Table 15 for rule DEF. If rule Def 1 is applied using parameters Key = *Features*/*Tip of the Day*/*Show* and User-ID = *Anne,* the boolean value *FALSE* is retrieved from the user preferences database table (Table 7). This value is returned as a result of rule Def 1 so that rule Def 2 is not applied according to the definition of rule DEF as shown in Table 15.

Therefore, by associating dimension *Default* with rule DEV and by providing the parameter *User-ID,* a value for a configuration item of the data tree, i.e. configuration item *Features*/*Tip of the Day*/*Show* is obtained, namely the value *FALSE* in the described example above.

As shown in Table 20 dimension *DeviceCaps* is associated with rule DEV-C, parameter *Client Type* and parameter combination *Client Type* and *Device Class.* Dimension *DevicePref* is associated with rule DEV-P, parameters *User-ID* and *Client Type* and parameter combination *User-ID, Client Type* and *Device Class.* Dimension *Function* is associated with rule FUNC, parameters *User-ID, Connection* Properties and *Client Type* and parameter combination *Roles*. Dimension *Level* is associated with rule LVL, parameter *User-ID* and parameter combination rank. Finally, dimension local is associated with Rule LCL, parameters *User-ID* and *Preferred Languages* and parameter combination *Accepted Languages.*

When applying the common rules RC 1 to RC 6 on the basis of the list of explicit parameter values given above (User-ID = Anne, Client Type = Palm, Connection Properties = LAN, secure, high-bandwidth, low-latency)) the following parameter combinations can be obtained:
- Accepted Languages: = *fr, de-AT*
- Device Class: = *Handheld*
- Rank: = *Employee*
- Roles: = *Power User, User*

If the rules associated with the dimensions as shown in Table 20 are applied using the parameters and parameter combinations above, the following data items can be obtained for the configuration items in the data tree.

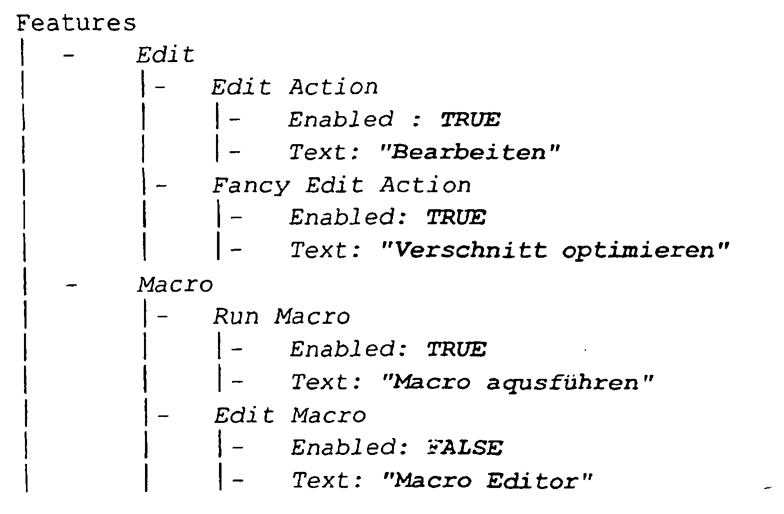

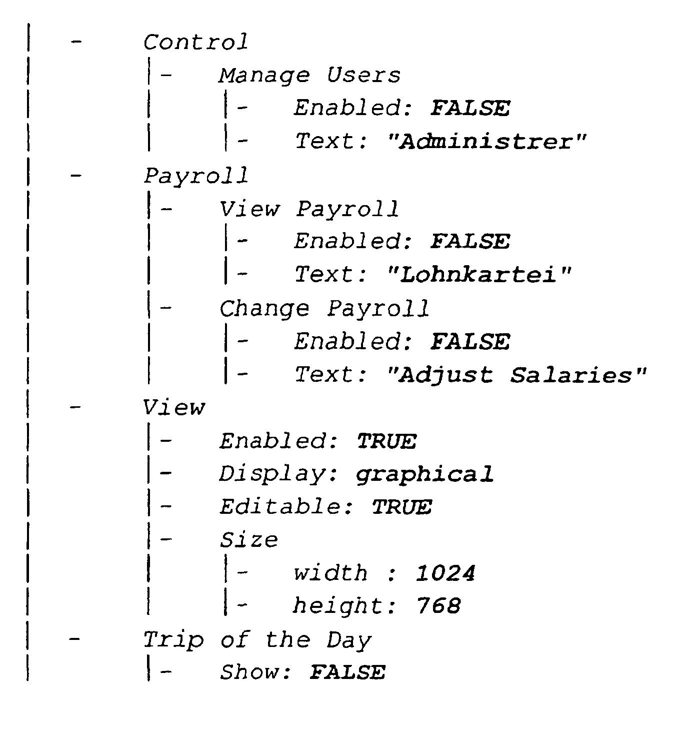

## Claims

1. Method for providing configuration data at a configuration server (1) in a client/server data processing environment comprising the operations:
receiving from a client (2) a request (REQ) (101) to provide values for configuration items (A, B, C, D, E, F) of said configuration data;
determining for each of said requested configuration items the respective one of one or more dimensions (DIM) (102) to which the configuration items of said configuration data have been assigned such that a configuration item is assigned to exactly one of said dimensions;
determining values for each of said configuration items by applying rules (RULE) associated with said dimensions (103); and
transmitting the values to said client (2) (104).

2. Method according to claim 1, further comprising the operation of receiving from a client (2) at least one parameter (PARA).

3. Method according to claim 1 or 2, wherein the applying of said rules (RULE) comprises the taking into consideration of at least one parameter.

4. Method according to one of claims 1 to 3, wherein the applying of said rules (RULE) comprises the using of a default value (DEFAULT).

5. Method of one of the claims 1 to 4, wherein the configuration server (1) receives said at least one parameter from a plurality of clients (2).

6. Method of one of the claims 1 to 5, wherein the configuration server (1) receives said request (REQ) for providing values for configuration items from a plurality of clients (2).

7. Method of one of claims 1 to 6, wherein the configuration server (1) receives said request (REQ) for providing values for configuration items via a communications network (3).

8. Method of one of claims 1 to 6, wherein the configuration server (1) receives said request (REQ) for providing values for configuration items via the Internet.

9. Method of one of claims 1 to 8, wherein the configuration items comprise at least one item selected from a group of items at least consisting of display size, display type, and text.

10. Method of one of claims 2 to 9, wherein the at least parameter (PARA) is selected from a group of parameters at least consisting of User-ID, Role, Rank, Level, Client Type, Connection Properties, and Preferred Language.

11. A computer readable medium, having a program recorded thereon, where the program is to make a computer execute the method according to one of the claims 1 to 10.

12. A computer program product comprising the computer readable medium according to claim 11.

13. A configuration server (1) for providing configuration data values to a client (2) comprising:
a receiving unit (7) suitable for receiving from said client (2) at least one parameter and/or a request (REQ) to provide values for one or more configuration items (A, B, C, D, E, F) of said configuration data;
a retrieving unit (9) suitable for retrieving values for the requested configuration items (A, B, C, D, E, F) of said configuration data; and
a transmitting unit (8) suitable for transmitting to said client (2) the values retrieved by said retrieving unit (9);
wherein each of said configuration items (A, B, C, D, E, F) of said configuration data is assigned to only one of one or more dimensions (DIM) some of which are related to a parameter or a combination of parameters (PARA) and for each of which at least one rule (RULE) is defined to be applied by the configuration server (1) for determining a value for a configuration item of said dimension; and
wherein said retrieving unit (9) comprises a first determining unit (10) for determining the dimension to which a requested configuration item is assigned and a second determining unit (11) for determining a value for said configuration item in accordance with said at least one rule (RULE).

14. Configuration server of claim 13, further comprising a storage unit (4, 12) for storing the configuration data, wherein the retrieving unit (9) is adapted for retrieving values for the requested configuration items (A, B, C, D, E, F) from said storage unit (4, 12).

15. Configuration server of one of claim 13 or 14, wherein said receiving unit (7) and said transmitting unit (8) are adapted for communicating with said client (2) via a communications network (3).

16. Configuration server of one of claim 13 or 14, wherein said receiving unit (7) and said transmitting unit (8) are adapted for communicating with said client (2) via the Internet.

17. Configuration server of one of claims 13 to 16, wherein said receiving unit (7) and said transmitting unit (8) are adapted for simultaneously communicating with more than one client (2).

18. Configuration server of one of claims 13 to 17, wherein said receiving unit (7) and said transmitting unit (8) are comprised in a communication unit (6) .

19. Configuration server of one of claims 13 to 18, wherein the configuration items at least one item selected from a group of items at least consisting of display size, display type, and text.

20. Configuration server of one of claims 13 to 19, wherein the at least parameter (PARA) is selected from a group of parameters at least consisting of User-ID, Role, Rank, Level, Client Type, Connection Properties, and Preferred Language.

21. Configuration data storage unit (4, 12) adapted for storing configuration data and for communicating with a retrieving unit (9) of a configuration server (1)
**characterized in that**
the configuration data storage unit (4, 12) is further adapted for storing said configuration data such that each configuration item of said configuration data is assigned to exactly one of a group of dimensions (DIM), wherein dimensions (DIM) are sets of configuration items having no configuration item in common.

22. Configuration data storage unit (4, 12) according to claim 19 or 20, being further adapted for storing rules (RULE) associated with said dimensions (DIM).

## Patentansprüche

1. Verfahren zum Bereitstellen von Konfigurationsdaten an einem Konfigurationsserver (1) in einer Client/Server-Datenverarbeitungsumgebung, die Operationen umfassend:
Empfangen von einem Client (2) einer Anforderung (REQ) (101) zum Bereitstellen von Werten für Konfigurationselemente (A, B, C, D, E, F) der Konfigurationsdaten;
Bestimmen für jede der angeforderten Konfigurationselemente die entsprechende eine von einer oder mehreren Dimensionen (DIM) (102), zu welcher die Konfigurationselemente der Konfigurationsdaten so zugeordnet wurden, dass ein Konfigurationselement genau einer der Dimensionen zugeordnet ist;
Bestimmen von Werten für jedes der Konfigurationselemente durch Anwenden von Regeln (RULE), die mit den Dimensionen (103) in Zusammenhang stehen; und
Übertragen der Werte an den Client (2) (104).

2. Verfahren nach Anspruch 1, ferner umfassend die Operation eines Empfangens von einem Client (2) von mindestens einem Parameter (PARA).

3. Verfahren nach Anspruch 1 oder 2, wobei das Anwenden der Regeln (RULE) das in Betrachtziehen von mindestens einem Parameter umfasst.

4. Verfahren nach einem der Ansprüche 1 bis 3, wobei das Anwenden der Regeln (RULE) das Verwenden von einem Standardwert (DEFAULT) umfasst.

5. Verfahren nach einem der Ansprüche 1 bis 4, wobei der Konfigurationsserver (1) den mindestens einen Parameter von einer Vielzahl von Clients (2) empfängt.

6. Verfahren nach einem der Ansprüche 1 bis 5, wobei der Konfigurationsserver (1) die Anforderung (REQ) zum Bereitstellen von Werten für Konfigurationselemente von einer Vielzahl von Clients (2) empfängt.

7. Verfahren nach einem der Ansprüche 1 bis 6, wobei der Konfigurationsserver (1) die Anforderung (REQ) zum Bereitstellen von Werten für Konfigurationselemente über ein Kommunikationsnetzwerk (3) empfängt.

8. Verfahren nach einem der Ansprüche 1 bis 6, wobei der Konfigurationsserver (1) die Anforderung (REQ) zum Bereitstellen von Werten für Konfigurationselemente über das Internet empfängt.

9. Verfahren nach einem der Ansprüche 1 bis 8, wobei die Konfigurationselemente mindestens ein Element umfassen, das aus einer Gruppe von Elementen ausgewählt wird, die mindestens aus einer Anzeigengröße, Anzeigeart und Text besteht.

10. Verfahren nach einem der Ansprüche 2 bis 9, wobei der mindestens vorkommende Parameter (PARA) aus einer Gruppe von Parametern mindestens bestehend aus einer Benutzer-ID, Rolle bzw. Funktion, Rang, Level bzw. Niveau, Client-Typ, Verbindungseigenschaften und bevorzugte Sprache ausgewählt wird.

11. Ein Computer lesbares Medium mit einem darauf aufgezeichneten Programm, wobei das Programm einen Computer veranlasst das Verfahren nach einem der Ansprüche 1 bis 10 auszuführen.

12. Ein Computerprogrammprodukt umfassend das Computer lesbare Medium nach Anspruch 11.

13. Ein Konfigurationsserver (1) zum Bereitstellen von Konfigurationsdatenwerten an einen Client (2) umfassend:
eine Empfangseinheit (7) ausgebildet zum Empfangen von dem Client (2) von mindestens einem Parameter und/oder einer Anforderung (REQ) zum Bereitstellen von Werten für ein oder mehrere Konfigurationselemente (A, B, C, D, E, F) der Konfigurationsdaten;
eine Abruf- bzw. Wiedergewinneinheit (9) ausgebildet zum Abrufen von Werten für die angeforderten Konfigurationselemente (A, B, C, D, E, F) der Konfigurationsdaten; und
eine Übertragungseinheit (8) ausgebildet zum Übertragen der durch die Abrufeinheit (9) abgerufenen Werte an den Client (2);
wobei jedes der Konfigurationselemente (A, B, C, D, E, F) der Konfigurationsdaten nur einer der einen oder mehreren Dimensionen (DIM) zugeordnet ist, wobei einige von diesen mit einem Parameter oder einer Kombination von Parametern (PARA) in Beziehung stehen und für jede von diesen mindestens eine Regel (RULE) definiert ist, die von dem Konfigurationsserver ((1) anzuwenden ist zum Bestimmen eines Wertes für ein Konfigurationselement der Dimension: und
wobei die Abrufeinheit (9) eine erste Bestimmungseinheit (10) umfasst, zum Bestimmen der Dimension, zu welcher ein angefordertes Konfigurationselement zuzuordnen ist sowie eine zweite Bestimmungseinheit (11) zum Bestimmen eines Wertes für das Konfigurationselement gemäß der mindestens einen Regel (RULE).

14. Konfigurationsserver nach Anspruch 13, ferner umfassend:
eine Speichereinheit (4, 12) zum Speichern der Konfigurationsdaten, wobei die Abrufeinheit (9) ausgebildet ist zum Abrufen von Werten für die angeforderten Konfigurationselemente (A, B, C, D, E, F) von der Speichereinheit (4, 12).

15. Konfigurationsserver nach Anspruch 13 oder 14, wobei die Empfangseinheit (7) und die Übertragungseinheit (8) ausgebildet sind zum Kommunizieren mit dem Client (2) über ein Kommunikationsnetzwerk (3).

16. Konfigurationsserver nach Anspruch 13 oder 14, wobei die Empfangseinheit (7) und die Übertragungseinheit (8) ausgebildet sind zum Kommunizieren mit dem Client (2) über das Internet.

17. Konfigurationsserver nach einem der Ansprüche 13 bis 16,
wobei die Empfangseinheit (7) und die Übertragungseinheit (8) ausgebildet sind zum Simultan-Kommunizieren mit mehr als einem Client (2).

18. Konfigurationsserver nach einem der Ansprüche 13 bis 17,
wobei die Empfangseinheit (7) und die Übertragungseinheit (8) in einer Kommunikationseinheit (6) enthalten sind.

19. Konfigurationsserver nach einem der Ansprüche 13 bis 18,
wobei die Konfigurationselemente mindestens ein Element umfassen von mindestens einem Element ausgewählt aus einer Gruppe von Elementen mindestens bestehend aus Anzeigengröße, Anzeigeart und Text.

20. Konfigurationsserver nach einem der Ansprüche 13 bis 19,
wobei der mindestens eine Parameter (PARA) aus einer Gruppe von Parametern ausgewählt wird mindestens bestehend aus User-ID, Rolle bzw. Funktion, Rang, Level bzw. Niveau, Client-Typ, Verbindungseigenschaften und bevorzugte Sprache.

21. Konfigurationsdatenspeichereinheit (4, 12) ausgebildet zum Speichern von Konfigurationsdaten und zum Kommunizieren mit einer Abruf- bzw. Wiedergewinneinheit (9) eines Konfigurationsservers (1),
**dadurch gekennzeichnet, dass**
die Konfigurationsdatenspeichereinheit (4, 12) ferner ausgebildet ist zum Speichern der Konfigurationsdaten, so dass jedes Konfigurationselement der Konfigurationsdaten genau einer aus einer Gruppe von Dimensionen (DIM) zugeordnet ist, wobei Dimensionen (DIM) Sätze von Konfigurationselementen mit keinem gemeinsamen Konfigurationselement sind.

22. Konfigurationsdatenspeichereinheit (4, 12) nach Anspruch 19 oder 20, wobei diese ferner ausgebildet ist zum Speichern von Regeln (RULE), die mit den Dimensionen (DIM) in Zusammenhang stehen.

## Revendications

1. Procédé pour fournir des données de configuration au niveau d'un serveur de configuration (1) dans un environnement de traitement de données de client / serveur comprenant les opérations consistant à :
recevoir d'un client (2) une demande (REQ) (101) pour fournir des valeurs pour des éléments de configuration (A, B, C, D, E, F) desdites données de configuration ;
déterminer pour chacun desdits éléments de configuration demandés la dimension respective d'une ou plusieurs dimensions (DIM) (102) à laquelle les éléments de configuration desdites données de configuration ont été attribués de sorte qu'un élément de configuration est attribué à exactement une desdites dimensions ;
déterminer des valeurs pour chacun desdits éléments de configuration en appliquant des règles (RULE) associées auxdites dimensions (103) ; et
transmettre les valeurs audit client (2) (104).

2. Procédé selon la revendication 1, comprenant de plus l'opération consistant à recevoir d'un client (2) au moins un paramètre (PARA).

3. Procédé selon la revendication 1 ou 2, dans lequel l'application desdites règles (RULE) comprend la prise en considération d'au moins un paramètre.

4. Procédé selon l'une des revendications 1 à 3, dans lequel l'application desdites règles (RULE) comprend l'utilisation d'une valeur par défaut (DEFAULT).

5. Procédé selon l'une des revendications 1 à 4, dans lequel le serveur de configuration (1) reçoit ledit au moins un paramètre à partir d'une pluralité de clients (2).

6. Procédé selon l'une des revendications 1 à 5, dans lequel le serveur de configuration (1) reçoit ladite demande (REQ) pour fournir des valeurs pour des éléments de configuration à partir d'une pluralité de clients (2).

7. Procédé selon l'une des revendications 1 à 6, dans lequel le serveur de configuration (1) reçoit ladite demande (REQ) pour fournir des valeurs pour des éléments de configuration via un réseau de communication (3).

8. Procédé selon l'une des revendications 1 à 6, dans lequel le serveur de configuration (1) reçoit ladite demande (REQ) pour fournir des valeurs pour des éléments de configuration via Internet.

9. Procédé selon l'une des revendications 1 à 8, dans lequel les éléments de configuration comprennent au moins un élément sélectionné à partir d'un groupe d'éléments constitués au moins de la taille d'affichage, du type d'affichage, et de texte.

10. Procédé selon l'une des revendications 2 à 9, dans lequel au moins le paramètre (PARA) est sélectionné à partir d'un groupe de paramètres constitués au moins de l'ID d'utilisateur, du Rôle, du Rang, du Niveau, du Type de Client, des Propriétés de Connexion, et de la Langue Préférée.

11. Support lisible par ordinateur, ayant un programme enregistré dessus, lequel programme doit servir à ce qu'un ordinateur exécute le procédé selon l'une des revendications 1 à 10.

12. Produit formant programme informatique comprenant le support lisible par ordinateur selon la revendication 11.

13. Serveur de configuration (1) pour fournir des valeurs de données de configuration à un client (2) comprenant :
une unité de réception (7) appropriée pour recevoir en provenance dudit client (2) au moins un paramètre et/ou une demande (REQ) pour fournir des valeurs pour un ou plusieurs éléments de configuration (A, B, C, D, E, F) desdites données de configuration ;
une unité de recherche (9) appropriée pour retrouver des valeurs pour les éléments de configuration demandés (A, B, C, D, E, F) desdites données de configuration ; et
une unité de transmission (8) appropriée pour transmettre audit client (2) les valeurs retrouvées par ladite unité de recherche (9) ;
dans lequel chacun desdits éléments de configuration (A, B, C, D, E, F) desdites données de configuration est attribué à seulement une dimension d'une ou plusieurs dimensions (DIM), certaines d'entre elles étant liées à un paramètre ou à une combinaison de paramètres (PARA) et pour chacune d'entre elles au moins une règle (RULE) est définie pour être appliquée par le serveur de configuration (1) pour déterminer une valeur pour un élément de configuration de ladite dimension ; et
dans lequel ladite unité de recherche (9) comprend une première unité de détermination (10) pour déterminer la dimension à laquelle un élément de configuration demandé est attribué et une secondé unité de détermination (11) pour déterminer une valeur pour ledit élément de configuration selon ladite au moins une règle (RULE).

14. Serveur de configuration selon la revendication 13, comprenant de plus une unité de stockage (4, 12) pour stocker les données de configuration, dans lequel l'unité de recherche (9) est conçue pour retrouver des valeurs pour les éléments de configuration demandés (A, B, C, D, E, F) à partir de ladite unité de stockage (4, 12).

15. Serveur de configuration selon l'une des revendications 13 ou 14, dans lequel ladite unité de réception (7) et ladite unité de transmission (8) sont conçues pour communiquer avec ledit client (2) via un réseau de communication (3).

16. Serveur de configuration selon l'une des revendications 13 ou 14, dans lequel ladite unité de réception (7) et ladite unité de transmission (8) sont conçues pour communiquer avec ledit client (2) via Internet.

17. Serveur de configuration selon l'une des revendications 13 à 16, dans lequel ladite unité de réception (7) et ladite unité de transmission (8) sont conçues pour communiquer simultanément avec plus d'un client (2).

18. Serveur de configuration selon l'une des revendications 13 à 17, dans lequel ladite unité de réception (7) et ladite unité de transmission (8) sont incluses dans une unité de communication (6).

19. Serveur de configuration selon l'une des revendications 13 à 18, dans lequel les éléments de configuration comprennent au moins un élément sélectionné à partir d'un groupe d'éléments constitués au moins de la taille d'affichage, du type d'affichage, et de texte.

20. Serveur de configuration selon l'une des revendications 13 à 19, dans lequel l'au moins un paramètre (PARA) est sélectionné à partir d'un groupe de paramètres constitués au moins de l'ID d'utilisateur, du Rôle, du Rang, du Niveau, du Type de Client, des Propriétés de Connexion, et de la Langue Préférée.

21. Unité de stockage de données de configuration (4, 12) conçue pour stocker des données de configuration et pour communiquer avec une unité de recherche (9) d'un serveur de configuration (1),
**caractérisée en ce que**
l'unité de stockage de données de configuration (4, 12) est de plus conçue pour stocker lesdites données de configuration de sorte que chaque élément de configuration desdites données de configuration est attribué à exactement une dimension d'un groupe de dimensions (DIM), dans lequel les dimensions (DIM) sont des ensembles d'éléments de configuration n'ayant aucun élément de configuration en commun.

22. Unité de stockage de données de configuration (4, 12) selon la revendication 19 ou 20, conçue de plus pour stocker des règles (RULE) associées auxdites dimensions (DIM).
